# DEMANDE DE BREVET EUROPEEN

(11) **EP 0 533 180 A1**
(43) Date de publication de la demande: **24.03.1993**
(21) Numéro de dépôt: 92115975.2
(22) Date de dépôt: 18.09.1992
(51) Int. Cl.: A01J 25/16, A01J 25/11

(54) **Plateau d'égouttage pour la fabrication des fromages**

(30) Priorité: 20.09.1991 FR 9111618
(71) Demandeur: Delacour, Frederic, F-37000 Tours (FR)
(72) Inventeur: Delacour, Frederic, F-37000 Tours (FR)
(74) Mandataire: Kügele, Bernhard

(57) **Abrégé**

Le support pour égouttage, affinage, acidification ou stockage du fromage comporte un plateau (4) en matériau polymère qui est muni d'un tramage (2) obtenu par un procédé thermique. En outre, le panneau (4) peut comporter une micro-perforation (3) dans le sens de son épaisseur, et des parties périphériques de ce panneau sont solidaires d'un cadre (1).

Ce support peut être utilisé directement pour l'égouttage d'un fromage à pâte molle sans la prévision d'un collecteur de sérum ou d'un support inférieur supplémentaire.

Le support selon l'invention présente des avantages d'une manipulation et manutention améliorées.

## Description

La présente invention a trait à un support pour égouttage, affinage, acidification ou stockage de fromages comportant un store orienté essentiellement horizontalement durant l'usage, store sur lequel repose un ou plusieurs fromages à un stade quelconque de la fabrication.

Dans l'art de la fabrication de fromages, nous connaissons une grande variété de supports pour les fromages durant les différents stades de leur fabrication, tels que l'égouttage des fromages à pâte molle, l'affinage, l'acidification et finalement pour le stockage.

Pour la fabrication des fromages à pâte molle, il est généralement connu de prévoir un support inférieur qui porte un store, un bloc moule comportant une pluralité de moules qui sont reliés l'un à l'autre étant disposés sur le store. Les moules individuels sont ouverts sur leurs extrémités inférieures et supérieures, et le caillé est disposé dans les moules de façon à ce que le sérum puisse s'écouler à travers les ouvertures du store pour tomber sur ou au travers du support inférieur.

La demande de brevet français 87 35139 (2 443 199) décrit un plateau destiné à l'égouttage du fromage comportant un cadre qui entoure un panneau qui est muni de stries et de rigoles perpendiculaires aux stries, aux deux côtés du panneau, les rigoles étant en communication avec une large perforation ménagée dans le bord qui entoure le plateau de façon à permettre l'évacuation du sérum qui s'écoule au travers des perforations disposées en séries verticalement dans une pile de plateaux superposés. Ce plateau est un plateau injécté dont les dimensions sont bien définies par le moule et ne peuvent pas être modifiées sans un changement couteux de ce moule.

La demande de brevet français 86 02665 (2 594 632) décrit un plateau double face pour la fabrication de fromages à pâte molle, plateau qui comporte un ensemble de tringles destinées à maintenir un store qui est disposé de façon à envelopper l'ensemble des tringles, en formant deux surfaces principales qui sont disposées de part et d'autre de l'ensemble de tringles.

La demande de brevet français 86 00622 (2 593 022) décrit un store en forme de baguettes reliées entre elles de façon parallèle par des fils en acier inoxydable ou en aluminium pur, store qui est utilisé ensemble avec un support qui lui donne la rigidité nécessaire pour supporter les fromages.

La demande de brevet français 83 20731 (2 556 559) décrit un plateau pour la fabrication de fromages comportant un support en profil de méandre, support qui porte un store sur lequel est posé un bloc moule, de façon à ce que le sérum du caillé qui a été disposé dans le moule traverse le store et s'écoule le long des rainures qui sont formées par le support en profil de méandre.

La demande de brevet français 81 10884 (2 506 560) décrit un support d'affinage de fromages, support qui est moulé en matière plastique et qui est constitué par un ensemble monolithique comportant un panneau qui est muni d'un système de rainures ainsi que de pieds qui sont formés de façon à être emboîtables l'un dans l'autre lors de la superposition des panneaux.

La demande de brevet 78 34766 (2 443 800) décrit un ensemble de supports inférieurs, de stores, et de blocs moules, ensembles qui sont adaptés pour être combinés de façon horizontale et verticale pour former un bloc consistant en un certain nombre d'ensembles juxtaposés de façon horizontale et verticale, ensembles qui sont maintenus rigidement par vissage. Alternativement chaque ensemble peut être constitué uniquement par un plateau et un bloc de moule seulement, les surfaces du plateau, dans ce cas, étant munies de rainures.

La demande de brevet français 86 11329 (2 602 642) décrit un plateau pour l'égouttage de fromages à pâte molle, comportant un cadre rectangulaire auquel sont soudés des traverses et des longerons de façon perpendiculaire, reliant respectivement les parties parallèles du cadre rectangulaire, ainsi qu'un store qui est posé ou fixé sur les traverses et longerons à l'intérieur du cadre.

Les demandes de brevets français 88 03762 (2 628 602) et 71 40546 (2 159 211) décrivent des supports pour l'affinage, l'acidification ou le stockage de fromages, le premier comportant un cadre à l'intérieur duquel est tendu un treillis, le deuxième étant constitué d'un ensemble de tringles formant traverses et longerons, ainsi que des tringles pliées en zigzag, un certain nombre de ces tringles pliées étant disposées de façon parallèle aux traverses et les autres de façon parallèle aux longerons, ayant une distance entre elles de façon à définir un encadrement pour les fromages individuels qui sont posés sur les longerons.

La revue de l'art antérieur exposé ci-dessus montre que l'on utilise aujourd'hui typiquement soit des stores à baguettes parallèles ou des plateaux à rainures pour l'égouttage des fromages à pâte molle, et surtout, que les outils que l'on utilise pour l'égouttage sont principalement des outils qui sont constitués de plusieurs éléments qui nécessitent un certain travail pour leur nettoyage et qui posent en outre des problèmes de nettoyage, vu leur structure souvent compliquée. A cause de ces problèmes de nettoyage, il se produit souvent un développement de bactéries aux endroits difficilement accessibles de ces éléments, ce qui représente un désavantage concernant la qualité des fromages obtenus ainsi que pour le maintien des normes d'hygiène imposées par les autorités.

Le but de la présente invention est donc de mettre à la disposition du fromager un support pour la fabrication du fromage à pâte molle, support qui permet de diminuer l'effort de manutention pour l'utilisateur, qui peut être nettoyé sans problème, et qui peut être utilisé en plus pour tous les stades de production d'un fromage à pâte molle ainsi que pour les fromages à pâte dure.

Selon la présente invention, ces buts sont obtenus par un support comme mentionné ci-dessus, et qui est en outre caractérisé en ce que le store est constitué d'un panneau à épaisseur essentiellement constante dont au moins la surface sur laquelle reposent le ou les fromages comporte un tramage obtenu par un procédé thermique, les bords dudit panneau étant munis d'un cadre qui est solidaire du panneau.

Selon une forme de réalisation avantageuse de la présente invention, le panneau peut comporter un tramage obtenu par un procédé thermique sur ses deux surfaces.

Selon l'utilisation dudit support, le panneau peut comporter une micro-perforation qui traverse ce panneau dans le sens de son épaisseur. Pour une utilisation d'égouttage on va avantageusement choisir un support pouvant comporter une telle micro-perforation pour obtenir une évacuation optimale du sérum, alors que pour des utilisations du type affinage, acidification ou pour le stockage durant lequel le dégagement de liquide à partir du fromage est minime ou même nul, une telle micro-perforation permettra une aération optimale du fromage en vue de son affinage. Dans certains cas la micro-perforation ne sera pas nécessaire.

Selon une forme de réalisation particulière, le cadre consiste en un ensemble géométrique ayant des dimensions extérieures essentiellement identiques à celles du panneau, et en une matière identique ou compatible avec la matière du panneau, cadre qui est solidarisé au panneau par un procédé thermique.

Un tel procédé thermique peut par exemple être implanté par une polyfusion. Selon l'utilisation du support, le cadre peut être solidaire d'un côté du panneau seulement, pour d'autres utilisations le cadre peut consister en deux éléments qui sont solidaires de part et d'autre du panneau.

Pour faciliter l'empilage des panneaux, les cadres des panneaux peuvent comporter un profil de sorte que le profil d'une partie supérieure du cadre puisse s'engager dans la partie inférieure du cadre d'un autre panneau.

Le support selon la présente invention est avantageusement entièrement constitué d'un matériau plastique de qualité alimentaire qui est admis pour la fabrication du fromage.

Le support selon la présente invention, comme déjà mentionné plus haut, peut être utilisé pour des phases de production de fromages qui impliquent l'évacuation d'un liquide ou des phases sans évacuation de liquide, et bien entendu, la prévision d'une micro-perforation du panneau peut être envisagée pour les deux possibilités d'utilisation, ainsi que l'absence d'une micro-perforation peut être également envisagée pour la catégorie d'utilisation durant laquelle a lieu une évacuation de liquide, compte tenu que le tramage qui a été obtenu par un procédé thermique permet un certain degré d'évacuation de liquide.

Selon une forme particulière de l'invention le panneau peut comporter un bord qui entoure le panneau à l'intérieur du cadre, bord qui représente une bande qui est enfoncé par rapport à la surface du panneau. Le bord peut être fabriqué par fraisage après la polifusion du cadre sur le panneau.

En outre le cadre peut avoir des ouvertures le traversant pour permettre l'égouttage du sérum. Le panneau peut egalement comporter des trous pour l'égouttage du sérum, trous qui sont disposés de façon à permettre l'égouttage du sérum entre les moules qui sont éventuellement disposées en dessous du panneau.

L'invention sera maintenant décrite plus en détail en se référant aux dessins, où
la figure 1 est un plan schématique montrant les éléments essentiels du support selon la présente invention,
la figure 2 est une coupe du support selon la figure 1 selon un plan perpendiculaire au panneau,
la figure 3 est une coupe correspondant à la figure 2 montrant un détail de fabrication,
la figure 4 montre une exécution particulière du cadre d'un support selon la présente invention, et
la figure 5 montre une autre forme de réalisation du cadre.

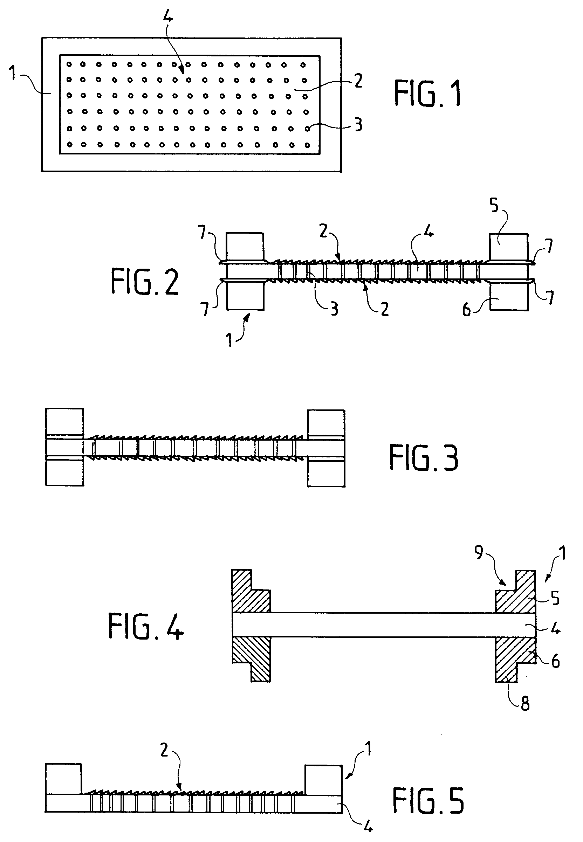

En se référant à la figure 1, on voit un support vu perpendiculairement à sa dimension principale, et comportant un cadre 1 et un panneau 4. Le panneau 4 comporte une série de micro-perforations 3 comportant des trous ou micro-trous qui peuvent être distribués sur la surface entière du panneau 4 de façon régulière ou variable. La surface du panneau 4 est munie d'un tramage 2 comportant des rainures fines qui peuvent être orientées tout en parallèle entre elles, ou en croisillons.

Le tramage 2 a été obtenu par un traitement thermique de la surface du panneau, de sorte que la surface reste essentiellement lisse sans présenter au fromage un aspect rugueux qui pourrait produire une certaine adhésion du fromage sur la surface du plateau.

La figure 2 est une coupe du support selon la figure 1 selon un plan perpendiculaire au plan de la figure 1, et on distingue le panneau 4 qui comporte à ses deux surfaces un tramage 2 ainsi qu'une micro-perforation 3. Le cadre 1 est constitué des deux éléments 5 et 6, dont l'élément 5 est solidaire d'une partie périphérique de la surface supérieure du panneau alors que l'élément 6 est solidaire d'une partie périphérique de la surface inférieure du panneau 4 de façon à ce que les dimensions extérieures des deux éléments de cadre ainsi que celles du panneau se superposent.

La fixation des éléments de cadre 5 et 6 sur le panneau 4 est effectuée par une opération de polyfusion, dans laquelle une partie superficielle du matériau est chauffée jusqu'à la fusion, permettant l'assemblage sous pression des trois éléments 4, 5 et 6 dans leur position relative de façon telle qu'ils restent dans cette position relative aprés refroidissement des parties du matériau fondu.

Après la resolidification du matériau fondu, on obtient des bavures qui seront enlevées par un procédé mécanique pour obtenir un plateau définitif tel que illustré dans la figure 3.

La figure 4 montre schématiquement un support comportant un panneau 4 et un cadre 1, ledit cadre étant exécuté en profil de sorte qu'un support identique puisse être superposé au support illustré de façon telle que la partie 8 de l'élément inférieur 6 du cadre puisse se loger dans l'évidement 9 de l'élément supérieur 5.

La figure 5 montre une autre forme de réalisation d'un support selon la présente invention, consistant en un panneau 4 et en un cadre 1, le cadre 1 étant fixé sur un côté du panneau 4 seulement, et un tramage 2 étant prévu sur un côté du panneau simplement, notamment sur le même côté du panneau où se trouve le cadre.

Le panneau 4 peut ou ne peut pas avoir une micro-perforation 3 selon l'utilisation désirée.

Evidemment, les supports selon les figures 1 à 4 peuvent être utilisés des deux côtés et notamment pour des phases de production durant lesquelles un ensemble empilé de supports est retourné de façon à ce que les fromages se dégagent de la surface d'un panneau pour venir en contact avec la surface du panneau d'un support voisin.

Le support selon la présente invention telle que décrit cidessus et dans les dessins est avantageusement entièrement constitué d'un matériau plastique tel que le polypropylène ou polyethylène, matériaux qui permettent facilement l'assemblage du panneau avec le cadre ou les éléments du cadre, tout en étant des matériaux qui sont acceptés pour la fabrication de fromages par les normes sanitaires.

D'une façon avantageuse, le matériau du cadre et le matériau du panneau d'un support selon la présente invention peuvent être le même ou différents pourvu qu'ils soient compatibles l'un avec l'autre concernant leur assemblage par polyfusion ainsi que dans leurs propriétés physiques telles que l'expansion thermique, étant donné que les procédés de fabrication de fromages impliquent une certaine variation de la température entre les différentes phases de fabrication.

## Revendications

1. Support pour égouttage, affinage, acidification ou stockage du fromage comportant un store orienté essentiellement horizontalement durant l'usage, store sur lequel reposent un ou plusieurs fromages en un stade quelconque de leur fabrication, caractérisé en ce que le store est constitué d'un panneau (4) à épaisseur essentiellement constante dont au moins la surface sur laquelle reposent le ou les fromages comporte un tramage (2) obtenu par un procédé thermique, les bords dudit panneau étant munis d'un cadre (1) qui est solidaire du panneau (4).

2. Support selon la revendication 1, caractérisé en ce que le panneau (4) comporte un tramage (2) obtenu par un procédé thermique sur ses deux surfaces.

3. Support selon la revendication 1 ou 2, caractérisé en ce que le panneau (4) comporte une micro-perforation (2) traversant le panneau (4) dans le sens de son épaisseur.

4. Support selon l'une quelconque des revendications 1 à 3, caractérisé en ce que le cadre (1) consiste en un ensemble géométrique ayant des dimensions extérieures essentiellement identiques à celles du panneau (4), et en une matière identique ou compatible à la matière du panneau (4), cadre qui est solidarisé au panneau par un procédé thermique.

5. Support selon la revendication 4, caractérisé en ce que le cadre (1) est solidarisé au panneau (4) par polyfusion.

6. Support selon l'une quelconque des revendications précédentes, caractérisé en ce que le cadre est solidaire d'un côté du panneau (4) seulement.

7. Support selon l'une quelconque des revendications 1 à 5, caractérisé en ce que le cadre (1) consiste en deux éléments (5, 6) qui sont solidaires du panneau (4) de part et d'autre de ce panneau.

8. Support selon l'une quelconque des revendications précédentes, caractérisé en ce que le cadre (1) comporte un profil (8, 9) permettant l'empilage d'une pluralité de supports, le profil (9) d'une partie supérieure du cadre étant dimensionné pour s'engager avec la partie inférieure (8) du cadre d'un autre panneau.

9. Support selon l'une quelconque des revendications précédentes, caractérisé en ce qu'il est entièrement constitué d'un matériau plastique de qualité alimentaire qui est admis pour la fabrication du fromage.

10. Support selon l'une quelconque des revendications précédentes, caractérisé en ce que le panneau (4) comporte un bord à l'intérieur du cadre (1), bord qui représente une bande enfoncée par rapport à la surface du panneau.

11. Support selon l'une quelconque des revendications précédentes caractérisé en ce, que le cadre (1) comporte des ouvertures le traversant, pour l'égouttage du sérum.

12. Support selon la revendication 10, caractérisé en ce que bord est fabriqué par fraisage après la polyfusion du cadre sur le panneau.

13. Support selon l'une quelconque des revendications précédentes caractérisé en ce, que le panneau comporte des trous pour l'écoulement du sérum, trous qui sont positionnés de façon à permettre l'écoulement du sérum à l'extérieur des moules qui sont éventuellement disposées en dessous dudit panneau.
